# EUROPÄISCHE PATENTANMELDUNG

(11) **EP 1 908 794 A2**
(43) Veröffentlichungstag der Anmeldung: **09.04.2008**
(21) Anmeldenummer: 06018775.4
(22) Anmeldetag: 07.09.2006
(51) Int. Cl.: C08J 5/18, C08J 3/22, C08F 290/14, C08F 283/06, C08F 290/06

(54) **Antistatisch ausgerüstete Folie, Verfahren zu ihrer Herstellung und ihre Verwendung**

(30) Priorität: 30.06.2006 DE 202006010309 U
(71) Anmelder: RB Folien GmbH, 53797 Lohmar (DE)
(72) Erfinder: Blumensaat, Ralf, 53844 Troisdorf (DE)
(74) Vertreter: Leifert & Steffan

(57) **Zusammenfassung**

Die vorliegende Erfindung betrifft eine Folie, gebildet aus einem Basisharz enthaltend ein Gemisch aus Polyethylen hoher Dichte (HDPE) und einem linearen Polyethylen niedriger Dichte vom Metallocen-Typ (mLLDPE), die durch Zusatz eines antistatisch wirkenden Mittels zum Basisharz antistatisch ausgerüstet ist, wobei als antistatisch wirkendes Mittel ein Masterbatch aus Polyethylen und einem Blockcopolymer verwendet wird, wobei das Blockcopolymer (a) mindestens einen Polyolefin-Block und (b) mindestens einen hydrophilen Polymerblock umfasst, sowie Verfahren zu ihrer Herstellung und ihre Verwendung.

## Beschreibung

Die Erfindung betrifft eine Folie, die aus einem Basisharz enthaltend Polyethylen hoher Dichte (HDPE) gebildet ist und durch Zusatz eines antistatisch wirkenden Mittels antistatisch ausgerüstet ist und insbesondere als Verpackungsfolie geeignet ist.

Für die Verpackung pulveriger Substanzen, etwa Pigmente für die pharmazeutische, kosmetische oder Lebensmittelindustrie sowie für Farb-/Lackherstellung und Tiernahrung werden Verpackungsbeutel benötigt, die antistatisch ausgerüstet sind, damit es beim Abfüllen der Produkte nicht zu statischen Aufladungen kommt bzw. diese bei längerem oder langem Lagern nicht entstehen. Gleichzeitig muss eine derartige Verpackungsfolie hohe Festigkeiten aufweisen, um den Befüllvorgang zuverlässig zu überstehen und auch das verpackte Produkt bis zu seiner Entnahme an einem Austreten zu hindern.

Bisherige Versuche mit antistatisch ausgerüsteten Verpackungsfolien auf Basis von HDPE sind in dieser Hinsicht nicht zufriedenstellend verlaufen, da die üblicherweise verwendeten mechanischen Antistatikmittel, die auf das Basisharz aufgepfropft werden, sich zum einen nach der Verarbeitung wieder vom Basisharz lösen und ausmigrieren. Durch diesen Vorgang besteht die Möglichkeit, dass die abgefüllten Güter von dem migrierten Antistatikum beschädigt und unbrauchbar werden. Zum anderen kann es durch den Migrationsprozess auch zu nicht gewollten Anhaftungen an der Materialoberfläche kommen. Zur Vermeidung von geplatzten oder gerissenen Verpackungsbeuteln aus den bisherigen Verpackungsfolien musste auf unwirtschaftlich große Materialstärken zurückgegriffen werden, was verbesserungswürdig erscheint.

Es ist auch schon versucht worden, durch Auftrag eines Lackes auf die Verpackungsfolien Anhaftungen entgegenzuwirken, jedoch neigen derartige Lackaufträge bei zu hohen Temperaturen dazu, klebrig zu werden, so dass es wiederum zu Materialanhaftungen kommen kann.

Die US 2005/0095418 A1 beschreibt antistatische Filme auf Polyethylenbasis, die Polyether-basierte Antistatika enthalten. Ein Nachteil der dort beschriebenen Filme besteht darin, dass sie eine unzureichende Verschweißbarkeit aufweisen, wodurch ein Austritt des Füllguts resultieren kann. Auch die antistatische Ausrüstung dieser Folien ist nicht ausreichend.

Aufgabe der vorliegenden Erfindung ist es daher, eine Verpackungsfolie der eingangs genannten Art vorzuschlagen, die gut extrudierbar und gut verschweißbar ist, gute trockene Oberflächenqualität und hohe mechanische Festigkeit zeigt und mit zuverlässiger langzeitstabiler antistatischer Wirkung ausgestattet ist.

Zur Lösung der eingangs gestellten Aufgabe wird erfindungsgemäß vorgeschlagen, zur Herstellung einer Folie ein Basisharz aus einem Polyethylen hoher Dichte (HDPE) und einem linearen Polyethylen niederer Dichte des Metallocen-Typs (mLLDPE) mit einem Masterbatch aus Polyethylen und einem Blockcopolymeren antistatisch auszurüsten, wobei das Blockcopolymer (a) mindestens einen hydrophilen Polymerblock und (b) mindestens einen Polyolefinblock umfasst. Das im Rahmen der Erfindung im Masterbatch eingesetzte Polyethylen übernimmt hierbei die Funktion eines polymeren Trägers, während das Blockcopolymere, d.h. beispielsweise die Polyether-Polyolefin-Blockcopolymer-Formulierung die gewünschte Antistatikeigenschaft bewirkt. Insoweit handelt es sich beim erfindungsgemäßen Vorschlag nicht mehr um die Verwendung eines mechanischen antistatischen Mittels, sondern um die eines chemischen Antistatikmittels, welches in die Molekülketten des Basisharzes eingebunden wird, so dass keinerlei Migration stattfindet und die erfindungsgemäßen Verpackungsfolien auch nach langer Lagerdauer zuverlässig antistatisch ausgerüstet sind. Gleichzeitig verhindert die Einbindung aufgrund des Polyethylen-Trägers im Masterbatch, dass die Molekularstruktur geschwächt wird, so dass die erfindungsgemäßen Folien, insbesondere Verpackungsfolien höchste mechanische Anforderungen erfüllen.

Das in der Erfindung eingesetzte Basisharz ist ein Gemisch aus Polyethylen hoher Dichte (HDPE) und einem linearen Polyethylen niedriger Dichte vom Metallocen-Typ (mLLDPE). Erst durch diesen kombinierten Einsatz wird eine höhere Festigkeit und verbesserte Verschweißbarkeit der erfindungsgemäßen Verpackungsfolie erreicht.

Als HDPE-Komponente des Basisharzes sind besonders HDPE mit einer vergleichsweise niederen Dichte geeignet. Vorzugsweise beträgt die Dichte des HDPE 0,940 bis 0,950 g/cm³.

Als mLLDPE sind insbesondere solche mit einer Dichte von 0,900 bis 0,940, besonders bevorzugt von 0,915 bis 0,935 und ganz besonders bevorzugt 0,920 bis 0,930 g/cm³ geeignet. Die erfindungsgemäß eingesetzten mLLDPE besitzen vorzugsweise eine unimodale Molmassenverteilung und besonders bevorzugt eine niedrige Polydispersität. Die Polydispersität, definiert als Quotient der gewichtsmittleren Molmasse (M_{w}) und der zahlenmittleren Molmasse (Mₙ), d.h. M_{w}/Mₙ, ist vorzugsweise ≤ 3, besonders bevorzugt ≤ 2,5 und ganz besonders bevorzugt zwischen 1,8 und 2,2. Derartige Produkte sind beispielsweise käuflich von Dow Chemical, Exxon oder Borealis erhältlich. Besonders bevorzugt sind die unter dem Handelsnamen Borecene^{™} erhältlichen mLLDPE der Firma Borealis (Stathelle, Norwegen). Hierunter sind insbesondere die Borecene^{™} FM-Typen, wie beispielsweise Borecene^{™} FM5220, Borecene^{™} FM5226, Borecene^{™} FM5276 geeignet.

Insbesondere ist vorgesehen, dass das Basisharz maximal 70 Gew.-% HDPE, vorzugsweise 30 bis 70 Gew.-% HDPE und entsprechend mindestens 30 Gew.-% mLLDPE, vorzugsweise entsprechend 70 bis 30 Gew.-% mLLDPE umfasst.

Eine solche Basisharz-Mischung kann sowohl durch eine Masterbatch-Herstellung mit anschließender Extrusion wie auch durch eine Coextrusion aus HDPE und mLLDPE erfolgen. Gleichermaßen ist es auch möglich, durch Verwendung gravimetrischer Dosierungen das gewünschte Gemisch aus HDPE und mLLDPE für das Basisharz in einem gemeinsamen Extruder herzustellen und nach dem bekannten Verfahren zu der erfindungsgemäßen Verpackungsfolie zu extrudieren.

Das im Masterbatch des antistatisch wirkenden Mittels aus Polyethylen (PE) und dem Blockcopolymer eingesetzte PE gehört vorzugsweise den Polyethylenen niederer Dichte, ganz besonders bevorzugt den linearen Polyethylenen niederer Dichte an. Ganz besonders bevorzugt enthält dieses neben Ethylen als Comonomere 1-Alkene, wie 1-Buten, 1-Hexen- oder 1-Octen, worunter letzteres ganz besonders als Comonomer bevorzugt ist.

Das im Masterbatch des antistatisch wirkenden Mittels aus Polyethylen und dem Blockcopolymeren eingesetzte Blockcopolymere enthält erfindungsgemäß mindestens einen Polyolefin-Block. Vorzugsweise sind die Blöcke abwechselnd und wiederholt miteinander verbunden. Die Verbindung zwischen den hydrophilen Polymerblöcken und den Polyolefin-Blöcken kann in bekannter Weise wie zum Beispiel über Estergruppenverknüpfungen, Amidgruppenverknüpfungen, Ethergruppenverknüpfungen, Urethangruppenverknüpfungen und Imidgruppenverknüpfungen erfolgen wie dies beispielsweise in der EP 1 167 425 A1 beschrieben ist. Als hydrophile Polymerblöcke sind die ebenfalls in der vorgenannten Patentanmeldung aufgeführten Polyether-Blöcke, Polyether enthaltenden hydrophilen Polymerblöcke und kationische bzw. anionische Polymerblöcke besonders geeignet. Gleiches gilt für die in der EP 1 167 425 A1 genannten Polyolefinblöcke. Die erfindungsgemäß eingesetzten Blockcopolymere können denen der EP 1 167 425 A1 entsprechen und auf die dort beschriebenen Werte erhalten werden.

Polyether- und Polyolefin-Blöcke enthaltende Blockcopolymere sind besonders gut geeignet und unter der Handelsbezeichnung Pelestat® von den Firmen Sanyo Chemical Industries oder Tomen America Inc. erhältlich. Hierunter ist besonders das als Pelestat®300 erhältliche Produkt bevorzugt. Die erfindungsgemäß eingesetzten Blockcopolymere können zur verbesserten Verarbeitbarkeit Zumischungen thermoplastischer Harze enthalten.

Die Dicke der erfindungsgemäß vorgeschlagenen Verpackungsfolie kann etwa 30 bis 100 µm umfassen, wobei Dicken kleiner 50 µm auch aus Kostengesichtspunkten bevorzugt sind, wobei überraschenderweise auch bei diesen geringen Dicken die mechanische Festigkeit der erfindungsgemäß vorgeschlagenen Verpackungsfolie ausreicht, um in automatisierten Befüllungsanlagen für aus dieser Verpackungsfolie hergestellte Verpackungsbeutel z.B. bei der Abfüllung von Pigmenten zu bestehen. Eine besonders bevorzugte Dicke der erfindungsgemäßen Verpackungsfolie liegt bei etwa 40 µm. Deutlich kleinere Dicken wie beispielsweise 10 oder 20 µm sind jedoch ebenfalls erreichbar.

Das im Rahmen der erfindungsgemäßen Verpackungsfolie eingesetzte antistatisch wirkende Mittel wird bevorzugt in einer Menge von 15 bis 25 Gew.-%, vorzugsweise 18 bis 22 Gew.-% und insbesondere bevorzugt 20 Gew.-%, jeweils bezogen auf die Gesamtrezeptur dem Basisharz zugefügt. Hierbei sind die genannten 20 Gew.-% als Optimum zwischen den erzielbaren Eigenschaften und den damit verbundenen Kosten ermittelt worden.

Das eingesetzte antistatisch wirkende Mittel weist ferner bevorzugt eine Dichte von 0,97 bis 1,0 g/cm³ und einen Schmelzindex MFI von vorzugsweise zwischen 15 und 30 g/10 min auf. Besonders bevorzugt weist das eingesetzte antistatisch wirkende Mittel eine Dichte von 0,99 g/cm³ und einen Schmelzindex MFI von 22 g/10 min auf.

Das Basisharz umfasst bevorzugt in der HDPE-Komponente ein solches mit einer Schmelzflussrate (MFR) (190°C/5 kg) von 0,10 bis 0,30 g/10 min nach ISO 1133 und eine Dichte von größer 0,94 g/cm³ nach ISO 1183. Besonders bevorzugt ist eine Schmelzflussrate (MFR) von 0,17 g/10 min und eine Dichte von 0,946 g/cm³.

Die wahlweise eingesetzte mLLDPE-Komponente des Basisharzes weist bevorzugt eine Dichte von 0,915 bis 0,935, besonders bevorzugt von 0,922 g/cm³ nach ISO 1183 auf.

Die im Rahmen der Erfindung vorgeschlagenen Verpackungsfolien erreichen Oberflächenwiderstände von 10⁷ bis 10¹¹ Ω.

Die erfindungsgemäßen Folien lassen sich auf gängigen Verpackungsautomaten hervorragend verarbeiten. Insbesondere zeichnen sich die erfindungsgemäßen Folien gegenüber den aus dem Stand der Technik bekannten Folien durch eine überlegene Verschweißbarkeit und Festigkeit der Verschweißbarkeit aus.

Weiterer Gegenstand der Erfindung ist ein Verfahren zur Herstellung der erfindungsgemäßen Folien, in welchem HDPE, mLLDPE und das antistatisch wirkende Mittel gravimetrisch in einem Extruder, vorzugsweise einem Einschneckenextruder, zudosiert, im Extruder aufgeschmolzen und zu einer Folie extrudiert wird.

Erfindungsgemäß ist weiterhin ein Verfahren zur Herstellung der erfindungsgemäßen Folien, in welchem ein Masterbatch aus HDPE, mLLDPE und dem antistatischen Mittel hergestellt, einem Extruder zugeführt, im Extruder aufgeschmolzen und zu einer Folie extrudiert wird.

Erfindungsgemäß ist auch ein Verfahren zur Herstellung der erfindungsgemäßen Folien, in welchem HDPE, mLLDPE und das antistatisch wirkende Mittel nach Aufschmelzen zu einer Folie coextrudiert wird.

Weiterer Gegenstand der Erfindung ist die Verwendung der erfindungsgemäßen Folien bzw. Verpackungsfolien zur Herstellung von Verpackungsmaterial.

### Ausführungsbeispiel:

In einem ersten Schritt wurden Verpackungsfolien auf einer Blasfolienextrusionsanlage mit Düsendurchmesser 150 mm hergestellt.

### Hierbei wurde folgende Rezeptur verwendet:

Bezogen auf 100 Gew.-% der gesamten zu der Verpackungsfolie extrudierten Masse wurden 40 Gew.-% eines HDPE und 40 Gew.-% eines mLLDPE als Basisharz mit 20 Gew.-% eines antistatisch wirkenden Mittels der nachfolgend näher beschriebenen Art gravimetrisch in einen Einschneckenextruder dosiert, im Extruder aufgeschmolzen und anschließend zu einer Folie mit einem Flächengewicht von 37,808 g/m² und einer Gesamtdichte von 0,945 g/cm³ extrudiert.

Als HDPE-Komponente des Basisharzes wurde das handelsüblich erhältliche Hostalen ACP 9240 Plus der Firma Basell Polyolefins mit einer Dichte von 0,946 g/cm³ und einer Schmelzflussrate (190°C/5 kg) von 0,17 g/10 min verwendet, während als mLLDPE-Komponente das handelsübliche Borecene^{™} FM5220 der Firma Borealis A/S mit einer typischen Dichte von 0,922 g/cm³ und einer typischen Schmelzflussrate MFR (190°C/ 2,16 kg) von 1,3 g/10 min eingesetzt wurde.

Das verwendete antistatisch wirkende Mittel war ein Masterbatch aus Polyethylen und einem antistatisch wirksamen Polyether-Polyolefin-Blockcopolymer, welches unter der Handelsbezeichnung ARX V 02/159 AT von der Firma Argus Additive Plastics GmbH erhältlich ist und eine Dichte von 0,99 g/cm³ aufweist.

Aus den solchermaßen hergestellten Verpackungsfolien wurden sodann in bekannten Beutelschweißverfahren Verpackungsbeutel hergestellt, die sich insbesondere für die Abfüllung von Pigmentpartikeln für die pharmazeutische Industrie oder auch für Kosmetik, Lebensmittel, Farben/Lacke, Tiernahrung und dergleichen mehr eignen und eine so hohe Festigkeit aufwiesen, dass sie in automatischen Abfüllanlagen für derartige Pigmentpartikel störungsfrei eingesetzt werden konnten.

Die solchermaßen hergestellten Verpackungsfolien wurden einer Oberflächenwiderstandsmessung nach DIN IEC 93 VDE 0303 Teil 30 (Schutzringelektrode) nach zeitabhängiger Lagerung unter verschiedenen klimatischen Bedingungen unterzogen. Die Ergebnisse sind in Tabellen 1, 2 und 3 angegeben.

**Tabelle 1**

| Die Proben wurden vor der Messung bei 23°C und 50% relativer Luftfeuchtigkeit konditioniert. | | | | | | | | | | | |
|---|---|---|---|---|---|---|---|---|---|---|---|
| Prüfmethode | Ergebnis | 1 Tag | | 3 Tage | | 7 Tage | | 10 Tage | | 14 Tage | |
| | | | | | | | | | | | |
| | | Seite außen | Seite innen | Seite außen | Seite Innen | Seite außen | Seite Innen | Seite außen | Seite Innen | Seite außen | Seite innen |
| Oberflächenwiderstand[Ω] | Median | 4,0·10¹¹ | 5,0·10¹¹ | 4,0·10¹¹ | 5,0·10¹¹ | 5,0·10¹¹ | 5,0·10¹¹ | 4,0·10¹¹ | 4,0·10¹¹ | 4,0·10¹¹ | 4,0·10¹¹ |
| DIN IEC 93 VDE 0303Teil 30 | min | 4,0·10¹¹ | 4,0·10¹¹ | 4,0·10¹¹ | 4,0·10¹¹ | 4,0·10¹¹ | 4,0·10¹¹ | 4,0·10¹¹ | 4,0·10¹¹ | 4,0·10¹¹ | 4,0·10¹¹ |
| (Schutzringelektrode) | max | 5,0·10¹¹ | 6,0·10¹¹ | 5,0·10¹¹ | 5,0·10¹¹ | 6,0·10¹¹ | 6,0·10¹¹ | 5,0·10¹¹ | 5,0·10¹¹ | 5,0·10¹¹ | 5,0·10¹¹ |

**Tabelle 2**

| Die Proben wurden vor der Messung bei 23°C und 12% ±3% relativer Luftfeuchtigkeit konditioniert (Military Standard). | | | | | | | | | | | |
|---|---|---|---|---|---|---|---|---|---|---|---|
| Prüfmethode | Ergebnis | 1 Tag | | 3 Tage | | 7 Tage | | 10 Tage | | 14 Tage | |
| | | | | | | | | | | | |
| | | Seite außen | Seite Innen | Seite außen | Seite Innen | Seite außen | Seite Innen | Seite außen | Seite Innen | Seite außen | Seite Innen |
| Oberflächenwlderstand[Ω] | Median | 4,0·10¹¹ | 4,0·10¹¹ | 5,0·10¹¹ | 5,0·10¹¹ | 5,0·10¹¹ | 5,0·10¹¹ | 3,0·10¹¹ | 4,0·10¹¹ | 4,0·10¹¹ | 4,0·10¹¹ |
| DIN IEC 93 VDE 0303Teil 30 | min | 3,0·10¹¹ | 2,0·10¹¹ | 2,0·10¹¹ | 4,0·10¹¹ | 2,0·10¹¹ | 2,0·10¹¹ | 1,0·10¹¹ | 4,0·10¹¹ | 4,0·10¹¹ | 4,0·10¹¹ |
| (Schutzringelektrode) | max | 5,0·10¹¹ | 7,0·10¹¹ | 6,0·10¹¹ | 5,0·10¹¹ | 6,0·10¹¹ | 6,0·10¹¹ | 5,0·10¹¹ | 5,0·10¹¹ | 5,0·10¹¹ | 5,0·10¹¹ |

**Tabelle 3**

| Die Proben wurden vor der Messung bei 40°C und 90% relativer Luftfeuchtigkeit konditioniert. | | | | | | | | | | | |
|---|---|---|---|---|---|---|---|---|---|---|---|
| Prüfmethode | Ergebnis | 1 Tag | | 3 Tage | | 7 Tage | | 10 Tage | | 14 Tage | |
| | | | | | | | | | | | |
| | | Seite außen | Seite innen | Seite außen | Seite Innen | Seite außen | Seite Innen | Seite außen | Seite Innen | Seite außen | Seite innen |
| Oberflächenwiderstand[Ω] | Median | 2,5·10⁰⁸ | 2,0·10⁰⁸ | 1,8·10⁰⁸ | 1,0·10⁰⁸ | 2,0·10⁰⁸ | 1,2·10⁰⁸ | 1,6·10⁰⁸ | 1,2·10⁰⁸ | 8,5·10⁰⁷ | 1,1·10⁰⁸ |
| DIN IEC 93 VDE 0303Teil 30 | min | 1,5·10⁰⁸ | 1,7·10⁰⁸ | 1,4·10⁰⁸ | 8,7·10⁰⁷ | 1,5·10⁰⁸ | 1,0·10⁰⁸ | 1,0·10⁰⁸ | 1,0·10⁰⁸ | 6,5·10⁰⁷ | 7,5·10⁰⁷ |
| (Schutzringelektrode) | max | 2,9·10⁰⁸ | 2,3·10⁰⁸ | 2,3·10⁰⁸ | 1,1·10⁰⁸ | 2,3·10⁰⁸ | 1,6·10⁰⁸ | 2,2·10⁰⁸ | 1,5·10⁰⁸ | 1,5·10⁰⁸ | 1,3·10⁰⁸ |

## Patentansprüche

1. Folie, gebildet aus einem Basisharz enthaltend ein Gemisch aus Polyethylen hoher Dichte (HDPE) und einem linearen Polyethylen niedriger Dichte vom Metallocen-Typ (mLLDPE), die durch Zusatz eines antistatisch wirkenden Mittels zum Basisharz antistatisch ausgerüstet ist, **dadurch gekennzeichnet, dass** als antistatisch wirkendes Mittel ein Masterbatch aus Polyethylen und einem Blockcopolymer verwendet ist, wobei das Blockcopolymer (a) mindestens einen Polyolefin-Block und (b) mindestens einen hydrophilen Polymerblock umfasst.

2. Folie nach Anspruch 1, wobei der hydrophile Polymerblock gewählt ist aus der Gruppe bestehend aus Polymerblöcken, Polyether enthaltenden hydrophilen Blöcken, anionischen Polymerblöcken und kationischen Polymerblöcken.

3. Folie nach Anspruch 1 oder 2, wobei das Blockcopolymer ein Polyether-Polyolefin-Blockcopolymer ist.

4. Folie nach einem der Ansprüche 1 bis 3, **dadurch gekennzeichnet, dass** das Basisharz 30 bis 70 Gew.-% HDPE und 70 bis 30 Gew.-% mLLDPE umfasst.

5. Folie nach einem der Ansprüche 1 bis 4, **dadurch gekennzeichnet, dass** sie eine Dicke von 10 bis 100 µm aufweist.

6. Folie nach einem der Ansprüche 1 bis 5, **dadurch gekennzeichnet, dass** das antistatisch wirkende Mittel in einer Menge von 15 bis 25 Gew.-%, vorzugsweise 18 bis 22 Gew.-% dem Basisharz zugefügt ist.

7. Folie nach einem der Ansprüche 1 bis 6, **dadurch gekennzeichnet, dass** das antistatisch wirkende Mittel eine Dichte von 0,97 bis 1,00 g/cm³, vorzugsweise 0,99 g/cm³ aufweist.

8. Folie nach einem der Ansprüche 1 bis 7, **dadurch gekennzeichnet, dass** das antistatisch wirkende Mittel einen Schmelzindex (MFI) zwischen 15 und 30 g/10 min aufweist.

9. Folie nach einem der Ansprüche 1 bis 8, **dadurch gekennzeichnet, dass** das Basisharz ein HDPE mit einer Schmelzflussrate (MFR) (190°C/5 kg) von 0,10 bis 0,30 g/10 min nach ISO 1133 und einer Dichte von größer 0,94 g/cm³ nach ISO 1183 umfasst.

10. Folie nach einem der Ansprüche 1 bis 9, **dadurch gekennzeichnet, dass** das Basisharz ein mLLDPE mit einer Dichte zwischen 0,915 und 0,935 g/cm³ nach ISO 1183 enthält.

11. Folie nach einem der Ansprüche 1 bis 10, **dadurch gekennzeichnet, dass** sie einen Oberflächenwiderstand von 10⁷ bis 10¹¹ Ω aufweist.

12. Folie nach einem der Ansprüche 1 bis 11, wobei es sich um eine Verpackungsfolie handelt.

13. Verpackungsbeutel für Pigmentpartikel, hergestellt aus einer Verpackungsfolie nach einem der vorangehenden Ansprüche.

14. Verfahren zur Herstellung einer Folie nach einem der Ansprüche 1 bis 12, **dadurch gekennzeichnet, dass** HDPE, mLLDPE und das antistatisch wirkende Mittel gravimetrisch in einem Extruder, vorzugsweise einem Einschneckenextruder, zudosiert, im Extruder aufgeschmolzen und zu einer Folie extrudiert wird.

15. Verfahren zur Herstellung einer Folie nach einem der Ansprüche 1 bis 12, **dadurch gekennzeichnet, dass** ein Masterbatch aus HDPE, mLLDPE und dem antistatischen Mittel hergestellt, einem Extruder zugeführt, im Extruder aufgeschmolzen und zu einer Folie extrudiert wird.

16. Verfahren zur Herstellung einer Folie nach einem der Ansprüche 1 bis 12, **dadurch gekennzeichnet, dass** HDPE, mLLDPE und das antistatisch wirkende Mittel nach Aufschmelzen zu einer Folie coextrudiert wird.

17. Verwendung einer Folie nach einem der Ansprüche 1 bis 12 zur Herstellung von Verpackungsmaterial.
